# EUROPÄISCHE PATENTSCHRIFT

(11) **EP 2 237 943 B1**
(45) Veröffentlichungstag und Bekanntmachung des Hinweises auf die Patenterteilung: **23.12.2015**
(21) Anmeldenummer: 09700274.5
(22) Anmeldetag: 12.01.2009
(51) Int. Cl.: B29C 70/32, B29C 70/34

(54) **VERFAHREN ZUR HERSTELLUNG (TEIL-)RINGFÖRMIGER, FASERVERSTÄRKTEN KUNSTSTOFF ENTHALTENDER BAUTEILE AUS FVW-HALBZEUGEN**
PROCESS FOR PRODUCING (PART-)ANNULAR, FIBER REINFORCED, POLYMER CONTAINING MOLDINGS FROM SEMIFINISHED FIBER COMPOSITE MATERIAL PRODUCTS
PROCÉDÉ DE FABRICATION DE COMPOSANTS CONTENANT DU PLASTIQUE RENFORCÉ PAR DES FIBRES, DE FORME (PARTIELLEMENT) ANNULAIRE DE SEMI-PRODUITS EN MATÉRIAU COMPOSITE RENFORCÉ PAR DES FIBRES

(30) Priorität: 11.01.2008 US 20415 P; 11.01.2008 DE 102008003974
(43) Veröffentlichungstag der Anmeldung: 13.10.2010
(73) Patentinhaber: Airbus Operations GmbH, 21129 Hamburg (DE)
(72) Erfinder: PASPIRGILIS, Bernd Ewald, 24972 Steinbergkirche (DE)
(74) Vertreter: UEXKÜLL & STOLBERG
(86) Internationale Anmeldenummer: PCT/EP2009/000121
(87) Internationale Veröffentlichungsnummer: WO 2009/087115

(56) Entgegenhaltungen:
- DE-A1- 19 906 618
- DANIEL GAY: "Matériaux composites" 1997, HERMES , PARIS , XP002523333 ISBN: 2-86601-586-X Seite 42

## Beschreibung

Die Erfindung betrifft ein Verfahren zur Herstellung ringförmiger oder teilringförmiger, faserverstärkten Kunststoff enthaltende Bauteile aus Faserverbundwerkstoff(FVW)-Halbzeugen.

In der DE 199 06 618 A1 ist ein Verfahren zur Herstellung von Produkten aus Faserverbundmaterialien unter Verwendung eines Wickelverfahrens beschrieben.

Aus der JP 06247770 A1 ist ein Verfahren zur Herstellung eines zylinderförmigen Bauteils bekannt, bei dem ein CFK-Verbundwerkstoff in eine Werkzeugkavität einer Zentrifuge angeordnet ist. Dabei wird Harz über eine Öffnung in die Kavität der Zentrifuge eingebracht. Aufgrund der Zentrifugalkraft wird eine gleichmäßige Imprägnierung des Verbundwerkstoffs erreicht.

Die US 5,393,215 B1 beschreibt ein Verfahren und eine Vorrichtung zur Herstellung eines Faserverbundwerkstoff-Bauteils, bei dem ein Verbundwerkstoff in eine Werkzeugkavität einer Zentrifuge eingebracht wird. Anschließend wird die Kavität evakuiert, in Rotation versetzt und dadurch Harz aus einem Behälter im Bereich der Zentrifugenmitte in die Kavität verdrängt.

Die DE 29 19 498 A1 offenbart eine Schleudergießvorrichtung mit einer Vielzahl von Werkzeugkavitäten, die über Kanäle mit einem im Zentrum der Vorrichtung angeordneten Gießschacht verbunden sind. Infolge der Zentrifugalkräfte wird die Harzmischung aus dem Gießschacht in die Werkzeugkavitäten gedrückt. Während dem Ausfüllen der Kavitäten wird die in der Form befindliche Luft in Richtung der Drehachse verdrängt und über einen Entlüftungskanal freigesetzt.

Die US 5,906,836 B1 beschreibt eine Schleudergießvorrichtung zur Herstellung von ringförmigen Bauteilen aus einem PU-Material. In die Kavität kann ein Verstärkungsdraht eingebracht sein.

Weiterhin ist aus der DE 39 35 133 C2 ein Wickelverfahren zur Herstellung von zumindest teilringförmigen Bauteilen bekannt, die eine Spule aus zwei Formkörpern aufweist, die um eine Längsachse drehbar ist, so dass eine unidirektionale Kohlenstoff-Faser auf die Mantelfläche aufgewickelt wird. Die Wickelform wird hierbei über die Bewegungssteuerung einer Führungseinrichtung gesteuert, wobei im Bereich von Seitenteilen der Formkörper eine größere Anzahl von Faserlagen übereinander gewickelt wurde als in der Mitte. Die Kavität der Spule wird mittels Abdeckungen verschlossen und über eine Gießöffnung mit flüssigem Kunststoff gefüllt.

In WO 02/058917 A2 wird ein zentrifugales Abformverfahren zum Herstellen eines Produktes beschrieben, wobei bei dem Verfahren abzuformendes Rohmaterial in eine Zentrifuge eingebracht wird. Damit das Produkt gleichmäßiger dick ausgebildet wird, wird eine Masse in die Zentrifuge, genauer gesagt, innerhalb eines von dem Rohmaterial umgebenden Volumens eingebracht. Von dieser eingebrachten Masse wird während des Abform-Prozesses während des Betriebs der Zentrifuge eine zusätzliche Kraft auf das abzuformende Material ausgeübt, bzw. es wird von Innen her Druck auf das Material ausgeübt, wodurch das Material mit der Außenwand der Zentrifuge in Kontakt gebracht wird.

In DE 2 138 353 A wird ein Verfahren zum Durchtränken von Halbzeugen mit Matrixmaterial beschrieben, wobei das Matrixmaterial mit großer kinetischer Energie ohne Beimengung von Luft auf und in das Halbzeug geschleudert wird.

In DE 1 886 051 U wird eine Tellerform-Schleudermaschine zum Herstellen von Kleinteilen beschrieben, die mehrere, übereinander angeordnete Tellerformen aufweist, die gemeinsam um ihre gemeinsame Zentrumsachse rotiert werden und über einen im Zentrum angeordneten gemeinsamen Zuführkanal für Matrixmaterial versorgt werden.

Aufgabe der Erfindung ist, ein Verfahren zur Herstellung ringförmiger, faserverstärkten Kunststoff enthaltende Bauteile aus Faserverbundwerkstoff(FVW)-Halbzeugen bereitzustellen, mit dem Bauteile mit komplexer Querschnittsform hergestellt werden können.

Diese Aufgabe wird mit den Merkmalen des Anspruchs 1 gelöst. Weitere Ausführungsformen sind in den auf diesen rückbezogenen Unteransprüchen angegeben.

Erfindungsgemäß ist ein Verfahren zur Herstellung von Halbzeugen oder Bauteilen, die ringförmig oder teilringförmig ausgebildet sind und faserverstärkten Kunststoff enthalten, aus FVW-Halbzeugen vorgesehen, mit den Schritten
(a) Positionierung zumindest eines ring- oder teilringförmigen Formstücks auf einer rotierbaren Trommel derart, dass diese eine spulenartige Form mit einem ring- oder teilringförmigen Kanalabschnitt, der sich in radialer Richtung und/oder in Längsrichtung der Trommel erstreckt,
(b) mehrlagiges Auftragen von Halbzeug-Material in den Kanalabschnitt der spulenartigen Form,
(c) zumindest einmalige Wiederholung der Schritte (a) und (b) mit dem Hinzufügen zumindest eines ring- oder teilringförmigen Formstücks auf der rotierbaren Trommel unter Ausbildung eines weiteren Kanalabschnitts, der sich an den bisherigen Kanalabschnitt anschließt, und Einlegen von Halbzeug-Material in den Kanalabschnitt, wobei die entstandene Abfolge von Kanalabschnitten zumindest teilweise die Form für das herzustellende Bauteil bilden,
(d) Einbringen von Matrix-Material in die Kanalabschnitte mit dem Einlegen von Halbzeug-Material in einzelnen Kanalabschnitte oder/und nach Ausbildung zumindest eines Kanalabschnitts,
(e) nach Ausbildung der Kanalabschnitte mit darin vorhandenen enthaltenen Halbzeug-Material und Matrix-Material Rotieren der Trommel derart, dass das Matrix-Material aufgrund der Zentrifugalkräfte nach außen gedrückt und im Kanal enthaltene Luft radial nach innen verdrängt wird,
(f) Aushärtung des in dem Kanal befindlichen Matrix-Materials unter Anwendung von Temperatur zu einem Kunststoff-Ring,
(g) nach der Härtung des ringförmigen Halbzeugs oder Bauteils Auftrennen der Anordnung von Formstücken in Abschnitte und Entnahme des gehärteten ringförmigen Halbzeugs oder Bauteils.

Erfindungsgemäß ist also die schrittweise Bildung des Formwerkzeugs bzw. von aneinander anschließenden Kanalabschnitten vorgesehen, wobei jeweils nach Fertigstellung eines von mehreren Kanalabschnitten in einem eigenen Verfahrensschritt das für Faserverbundbauteile zu verwendende Faser-Halbzeug oder Halbzug-Material in den jeweils entstandenen Kanalabschnitt eingelegt wird.

Erfindungsgemäß kann vorgesehen sein, dass vor dem Rotieren der Trommel die Positionierung einer Mehrzahl von ring- oder teilringförmigen Formstücken und das mehrlagigeAuftragen des Halbzeugs in den Kanal der spulenartigen Form mehrfach abwechselnd erfolgt.

Bei dem erfindungsgemäßen Verfahren kann insbesondere vorgesehen sein, dass zwei aneinander liegende Formstücke derart gestaltet sind, dass diese formschlüssig zusammenwirken, so dass das in radialer Richtung der Trommel außen liegende Formstück an dem radial innen liegenden Formstück in axialer Richtung der Trommel fixiert ist, und dass eine in die axiale Richtung gerichtete Seitenwand des außen liegenden Formstücks eine Seitenwand eines Kanalabschnitts bildet.

Dabei kann vorgesehen sein, dass zwei Formstücke auf die jeweils gebildete Anordnung von Formstücken derart aufgebracht werden, dass zwei einander gegenüber liegende Seitenwände und entlang der radialen Richtung der Trommel verlaufenden Seitenwände der Formstücke einen Kanalabschnitt zur Bildung eines Bauteil-Steges ausbilden, der sich an einen mittels Formstücken bereits gebildeten Kanalabschnitt anschließt, und dass auf entsprechende Aufnahmeflächen der Formstücke ein sich in Umfangsrichtung erstreckendes Deckelelement aufgebracht wird, das den gebildeten Kanalabschnitt in radialer Richtung nach außen abschließt, so dass bei dem Rotieren der Trommel das Abschlussstück ein Herausbewegen des Matrix-Materials aus dem Kanal verhindert.

Dabei kann eine Oberfläche des Deckelelements und die Oberseite zumindest eines der Formstücke einen sich in axialer Richtung der Trommel erstreckenden Kanalabschnitt bilden, der an einen entlang der radialen Richtung der Trommel verlaufenden Kanalabschnitt zur Bildung eines Bauteil-Steges anschließt, und dass zur Bildung eines sich axial erstreckenden Flansches in den sich axial erstreckenden Kanalabschnitt Halbzeug-Material eingelegt und Matrix-Material eingeführt wird.

Weiterhin kann vorgesehen sein, dass bei der Bildung der spulenartigen Form mit dem ringförmigen Kanal aus einer Mehrzahl von ring- oder teilringförmigen Formstücken zumindest ein Zufuhrkanal für die Einführung von Matrix-Material in den Kanal gebildet wird. Dabei kann der Zufuhrkanal von dem Inneren der Trommel in den Kanal mündet. Alternativ oder zusätzlich kann ein Zufuhrkanal gebildet werden, der von dem Kanal in die äußere Umgebung der Trommel mündet.

Nach dem erfindungsgemäßen Verfahren kann ein Abschlussstück oder ein Deckel verwendet werden, der derart auf der spulenartigen Form angeordnet wird, dass dieses oder dieser den Kanal radial außen abschließt, so dass bei dem Rotieren der Trommel das Abschlussstück ein Herausbewegen des Matrix-Materials aus dem Kanal verhindert.

Erfindungsgemäß kann vorgesehen sein, dass nach der Fertigstellung des Kunststoff-Rings ein Auftrennen desselben in Abschnitte und die Entnahme derselben erfolgt.

Als Matrix-Material kann ein Harz oder eine Metallschmelze verwendet werden. Weiterhin können eine Auswahl oder eine Kombination von Rovings, Fabrics, textilen Gelegen, Prepregs und/oder Fäden als Halbzeug verwendet werden.

Die Formstücke können aus faserverstärkten Materialien gebildet sein.

Das Anordnen der Formstücke kann derart vorgesehen sein, dass der Kanal der spulenartigen Form derartig gebildet ist, dass dieser die Form für eine Kombination aus zumindest einem Bördel und zumindest einem Steg für das herzustellende Bauteil bildet.

Die Positionierung einer Mehrzahl von ring- oder teilringförmigen Formstücken auf einer rotierbaren Trommel kann derart erfolgen, dass auf derselben Trommel in Längsrichtung der Trommel nebeneinander mehrere Bauteile aus FVW-Halbzeugen hergestellt und von der Trommel entnommen werden.

Mit dem Verfahren nach der Erfindung können insbesondere mehrere gehärtete Halbzeuge oder Bauteile in einem Parallel-Verfahren auf derselben Trommel hergestellt werden, d.h. es kann vorgesehen sein, dass die Positionierung einer Mehrzahl von ring- oder teilringförmigen Formstücken auf einer rotierbaren Trommel derart erfolgt, dass auf derselben Trommel Formstücke positioniert werden, dass in Längsrichtung der Trommel mehrere geformte Halbzeuge oder Bauteile aus FVW-Halbzeugen hergestellt und von der Trommel entnommen werden können.

Nach der Erfindung ist somit die Herstellung eines ringförmigen oder teilringförmigenfaserverstärkten Kunststoff enthaltenden Halbzeugs oder Bauteils aus FVW-Halbzeugen vorgesehen. Das erfindungsgemäße Verfahren sieht vor, einen Kanal mittels Formstücken schrittweise aus Kanal-Abschnitten derart aufzubauen, dass diese nach und nach eine Form des herzustellenden Bauteils bilden. Schrittweise wird der Kanal aus Abschnitten gebildet, wobei schrittweise nach Herstellung eines Kanalabschnitts in diesen jeweils Halbzeug-Material zur Herstellung eines Faserverbund-Bauteils eingelegt wird. Das bedeutet, dass das Halbzeug-Material mit der für die Herstellung eines Faserverbund-Bauteils notwendigen Faser-Orientierung in den Kanal eingelegt werden kann. Dabei kann z.B. Fasermaterial durch ein Wickelverfahren in einen Kanalabschnitt eingelegt werden. Dies ist inbesondere möglich, wenn der jeweils gebildete Kanalabschnitt derart geformt ist, dass dieser rotationssysmmetrisch um die Trommelachse verläuft und radial nach außen offen und somit für das Einlegen von Fasern oder Fasersträngen oder trockenen oder imprägnierten Halbzeugen aus Fasern zugänglich ist. Erfindungsgemäß ist weiterhin vorgesehen, dass nach Bildung eines Kanalabschnitts das Matrixmaterial und dabei oder nach Bildung mehrerer Kanalabschnitte Matrixmaterial in die Kanalabschnitte eingeführt wird. Die Einbringung von Halbzeugen erfolgt insbesondere mit einer vorbestimmten Faserorientierung, die der Faserorientierung im herzustellenden Halbzeug oder Bauteil entsprechen soll, so dass die Herstellung einer komplexen vorgegebenen Form, z.B. mit radial verlaufenden Stegen und daran axial anschließenden Flanschen, mittels eines Rotationsverfahrens technisch möglich ist.

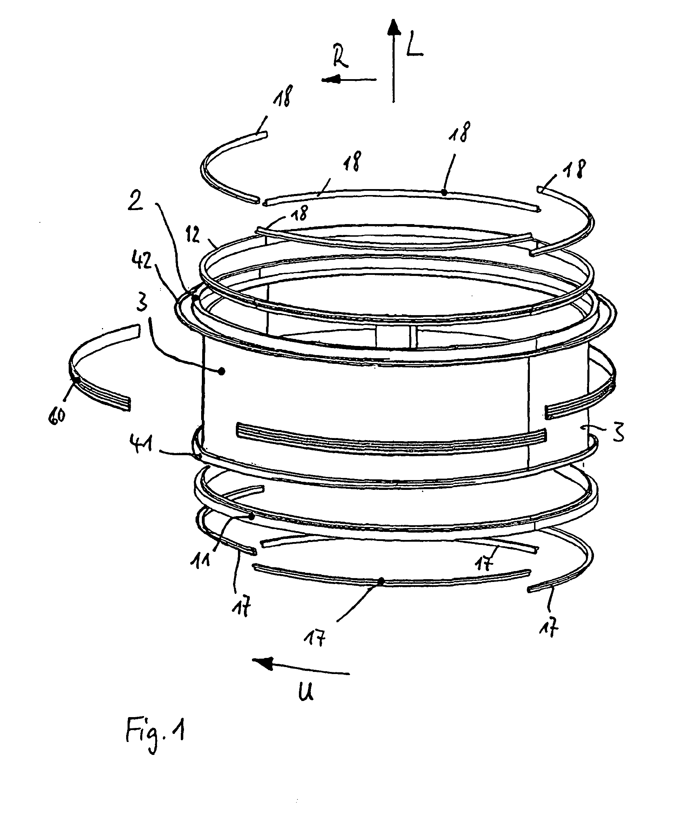

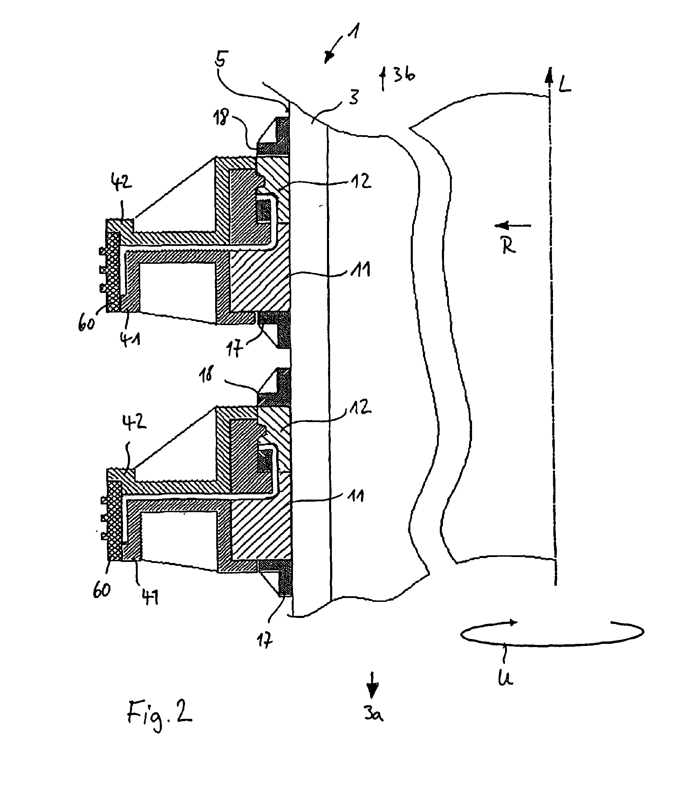

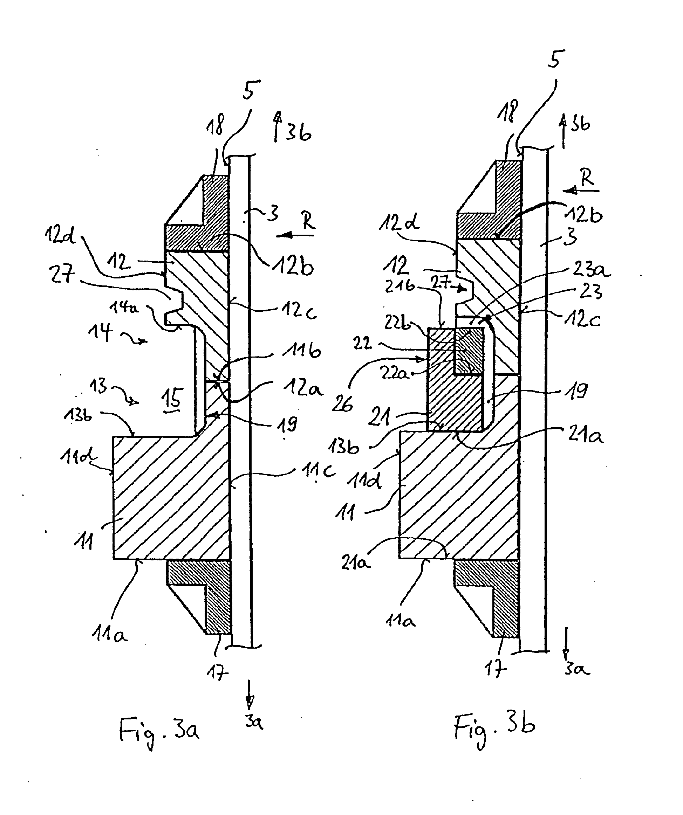

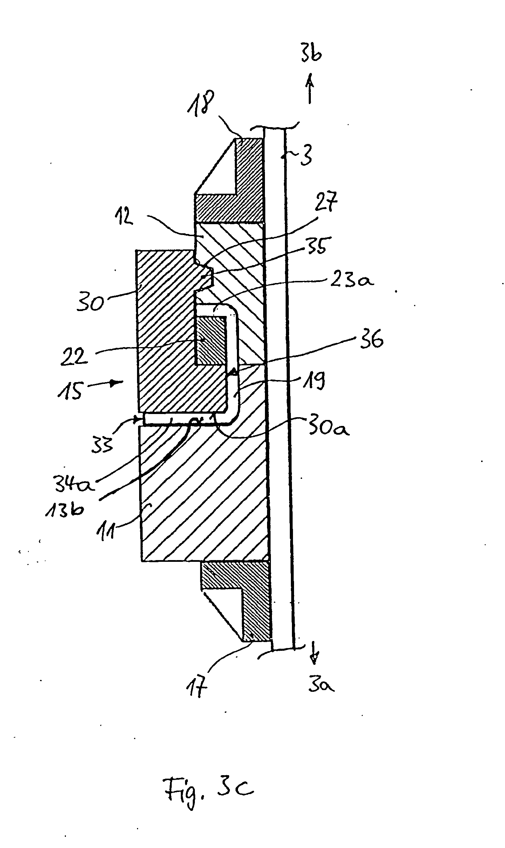

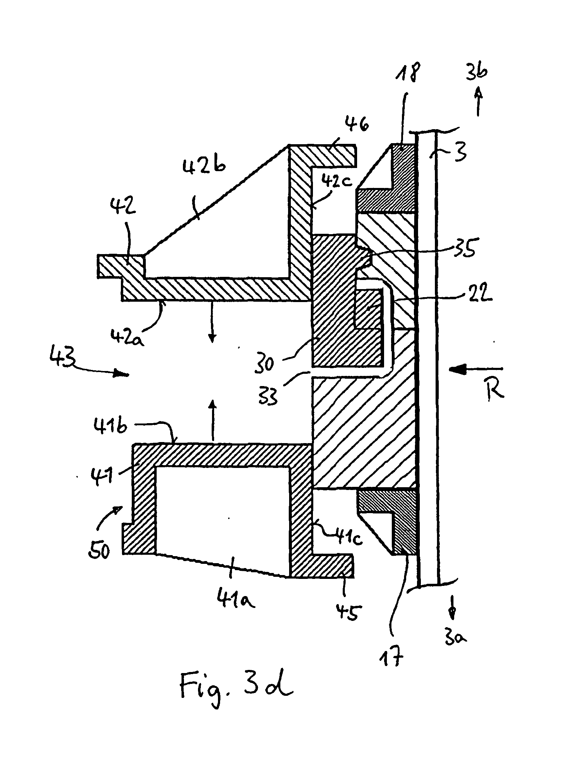

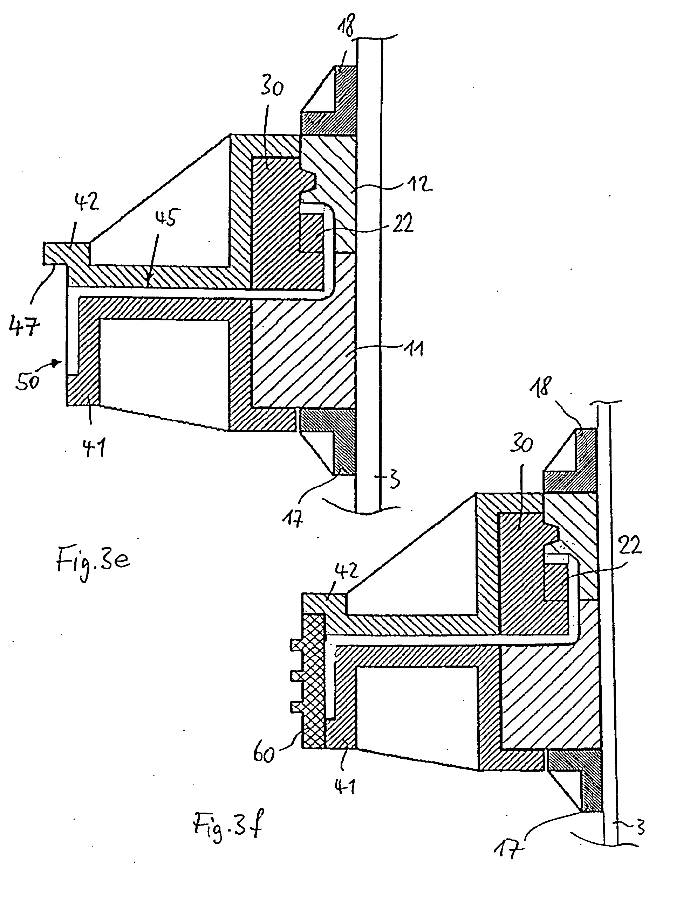

Im Folgenden werden Ausführungsbeispiele der Erfindung an Hand der beigefügte Figuren beschrieben, die zeigen:
▪ Figur 1 eine perspektivische Explosionsdarstellung der erfindungsgemäß vorgesehenen Trommel und mehrerer ring- oder teilringförmiger Formstücken zur Anordnung auf der rotierbaren Trommel,
▪ Figur 2 einen Teilschnitt durch die rotierbare Trommel in deren Längsrichtung mit einem beipielsweisen vervollständigten Aufbau von ring- oder teilringförmigen Formstücken auf der Trommel,
▪ Figur 3a einen Auflagebereich der rotierbaren Trommel mit zwei auf dieser angeordneten ringförmigen Formstücken, die seitlich von Feststellwinkel-Ringen abgestützt sind, sowie mit einem Auftrag eines Halbzeugs zur Bildung eines Innengurtes für den herzustellenden Spant,
▪ Figur 3b einen Auflagebereich der rotierbaren Trommel, auf dem ausgehend von dem in der Figur 3a dargestellten Zustand zwei weitere ringförmige Formstücke zur zusätzlichen Bildung eines Innenbördels des herzustellenden Spants aufgebracht worden sind,
▪ Figur 3c einen Auflagebereich der rotierbaren Trommel, auf dem ausgehend von dem in der Figur 3b dargestellten Zustand ein weiteres ringförmiges Formstück im Austausch gegen ein zuvor aufgebrachtes Formstück zur zusätzlichen Bildung eines Stegs des herzustellenden Spants aufgebracht worden sind,
▪ Figur 3d einen Auflagebereich der rotierbaren Trommel, auf dem ausgehend von dem in der Figur 3c dargestellten Zustand zwei weitere ringförmige Formstücke im Austausch gegen ein bereits aufgebrachtes Formstück sowie zwei weitere ringförmige Formstücke zur Weiterbildung des im vorangegangenen Schritt gebildeten Stegs am herzustellenden Spant aufgebracht worden sind,
▪ Figur 3e einen Auflagebereich der rotierbaren Trommel, auf dem ausgehend von dem in der Figur 3d dargestellten Zustand mit den bereits aufgebrachten ringförmigen Formstücken zusätzlich ein Außengurt des herzustellenden Spants gewickelt worden ist,
▪ Figur 3f einen Auflagebereich der rotierbaren Trommel, auf dem ausgehend von dem in der Figur 3e dargestellten Zustand ein Ring-Deckelelement zum Abschluss des aufgebrachten Formstück-Verbands aufgebracht worden ist.

Die Figur 1 zeigt eine perspektivische Explosionsdarstellung der erfindungsgemäß vorgesehenen Herstellungsvorrichtung 1 mit einer Trommel 3 und mit mehreren ring- oder teilringförmigen auf dieser aufgebrachten Formstücken, die in einem Anwendungsbeispiel des erfindungsgemäßen Verfahren zur Bildung eines ringförmigen Spants für einen Flugzeugrumpf zur Anordnung auf der rotierbaren Trommel verwendet werden können. Zumindest eines der aufgelegten Formstücke weist eine oder mehrere Außenflächen auf, auf die Halbzeug-Material aufgelegt werden kann.

Mit dem erfindungsgemäßen Verfahren kann nicht nur ein Profil, wie z.B. ein Spant hergestellt werden, sondern können auch mehrere Profile gleichzeitig hergestellt werden. Als Beispiel ist in der Figur 2 die gleichzeitige Herstellung von zwei Profilen dargestellt. Dadurch erhöht sich der Maschinendurchsatz und die Zahl der mit der erfindungsgemäßen Herstellungsvorrichtung herstellbaren Bauteile pro Zeitintervall.

Durch die Aufteilung in mehrere Formsegmente können auch nicht-rotationssymmetrische Halbzeuge oder Bauteile hergestellt werden. Zum Beispiel können Bauteile mit elliptischen Grundquerschnittsformen hergestellt werden. Auch können Bauteile mit Grundquerschnittsformen hergestellt werden, die nicht geschlossen sind und z.B. teil-elliptische oder teil-paraboloide Formen haben.

Als Halbzeug kann oder können dabei insbesondere verwendet werden: Rovings, Fabrics, textile Gelege, Prepregs und/oder Fäden. Mit dem Halbzeug wird ein Matrixmaterial verwendet. Das Matrixmaterial, für das ein Harz oder eine Metallschmelze verwendet wird, wird in einen erzeugten Kanal eingebracht, nachdem das Halbzeug in den jeweiligen Kanalabschnitt eingebracht worden ist. Dieses kann zusätzlich auch mit dem Halbzeug, z.B. wenn es sich um vorimprägnierte Halbzeuge (Prepregs) handelt, auf die Trommel aufgebracht werden.

Für die Zwecke der Beschreibung ist der Trommel 3 die Längsrichtung L (Figur 2), die mit ihrer Symmetrieachse zusammenfällt, zugeordnet worden. Daraus ergibt sich eine radiale Richtung R und eine Umfangsrichtung U. Die Reihenfolge des Aufbringens von ring- oder teilringförmigen Formstücken auf die Trommel ist für ein abgewandeltes Anwendungsbeispiel in den Figuren 3a bis 3f in verschiedenen Verfahrensschritten nach der Erfindung dargestellt. Die Figur 2 zeigt dabei einen Teilschnitt durch die rotierbare Trommel in deren Längsrichtung mit dem vervollständigten Aufbau von ring- oder teilringförmigen Formstücken auf der Trommel, der in Schritten in den Figuren 3a bis 3f dargestellt ist.

Nach dem erfindungsgemäßen Verfahren zur Herstellung von ringförmigen oder teilringförmigen Halbzeugen oder Bauteilen aus FVW-Halbzeugen, die faserverstärkten Kunststoff enthalten, erfolgt zunächst ein Positionieren einer Mehrzahl von ring- oder teilringförmigen Formstücken auf einer rotierbaren Trommel derart, dass diese sich in Umfangsrichtung der Trommel erstrecken und dadurch eine spulenartige Form mit einer ringförmigen Aufnahme oder einem Kanalabschnitt zur Aufnahme des Halbzeugs bilden, und anschließend ein mehrlagiges Auftragen des Halbzeugs in die ringförmige Aufnahme der spulenartigen Form. Die ringförmige Aufnahme wird in einer Gestalt erzeugt, mit der die Bildung zumindest eines Teils des herzustellenden Bauteils erfolgen kann.

In dem in den Figuren 3a bis 3f dargestellten Ausführungsbeispiel werden zunächst auf einem Auflagebereich oder Auflagefläche 5 der rotierbaren Trommel 3 zwei ringförmige Formstücke 11, 12 angeordnet, die in dem hier beschriebenen Ausführungsbeispiel im Verlaufe des Verfahrens nicht ausgetauscht werden und deshalb auch als Basis-Formstücke bezeichnet werden können. Die Auflagefläche 5 der rotierbaren Trommel 3 kann auch die Umfangsfläche einer auf der Umfangsfläche der Trommel gelegenen Hülse sein. Jedes Formstück 11, 12 weist eine erste, einem ersten Trommelende 3a zugewandte Seitenfläche 11 a bzw. 12a und eine zweite, einem zweiten Trommelende 3b zugewandte Seitenfläche 11 b, 12b auf. Die radialen Innenflächen 11c, 12c der Basis-Formstücke 11, 12, liegen auf der Auflagefläche 5 der Trommel 3.

Die Außenumfangsflächen 11d, 12d weisen im beschriebenen Ausführungsbeispiel eine Kontur auf, auf die teilweise ein Halbzeug-Material aufgelegt oder aufgewickelt werden kann und die sich zur Aufnahme weiterer Formstücke eignet. Dazu weisen die Formstücke im hier beschriebenen Anwendungsfall jeweils eine Ausnehmung 13 bzw. 14 auf, die an entsprechenden radial außen liegenden Ecken liegen, so dass diese bei entsprechender Positionierung der Formstücke 11, 12 auf der Trommel 3 eine zusammenhängende Ausnehmung 15 bilden. In Richtung auf die Trommelenden 3a, 3b gesehen ist diese Ausnehmung 15 durch eine zunächst freiliegende, radial verlaufende und dem zweiten Trommellende zugewandte Seitenfläche 13b des ersten Formstücks 11 und eine gegenüberliegende, zunächst freiliegende und radial verlaufende sowie dem ersten Trommelende 3a zugewandte Seitenfläche 14a zweiten Formstücks 12 begrenzt. Die Formstücke 11, 12 werden an jedem ihrer, den jeweiligen Trommelenden 3a, 3b zugewandten Seiteflächen 11a, 12b mit einem Feststellwinkel 18, 17 gesehen nach außen, d.h. in der Längsrichtung L, abgestützt.

In die Aufnahme 15 wird bei dem dargestellten Anwendungsfall Halbzeug-Material mit einer vorbestimmten, in radialer Richtung R verlaufenden Dicke eingelegt. Diese Halbzeug-Schicht 19 wird nach dem Härtungsschritt des fertigen Bauteils einen Innenbördel des herzustellenden Spantes bilden, wobei die Schichtdicke der Dicke des Innenbördels entspricht (Figur 3a).

In einem weiteren Schritt werden ein erstes und ein zweites Formstück 21 bzw. 22 auf die für die Bildung des Innenbördels vorgesehene Schicht 19 aufgelegt, die in einem nachfolgenden Schritt durch andere Formstücke ersetzt werden, so dass diese Formstücke auch als Zwischen-Formstücke bezeichnet werden können. Im beschriebenen Ausführungsbeispiel ist das erste Zwischen-Formstück 21 derart gestaltet und derart in die Ausnehmung 15 gelegt, dass das erste Zwischen-Formstück 21 das zweite Zwischen-Formstück 22 radial außen überdeckt und dieses in einer Ausnehmung auf der radialen Innenseite des ersten Zwischen-Formstücks 21 aufgenommen ist. Dabei sind das zweite Zwischen-Formstück 22 und das zweite

Basis-Formstück 12 derart gestaltet und derart relativ zueinander gelegen, dass zwischen dem ersten Zwischen-Formstück 22 und der neben diesem liegenden, sich radial erstreckenden Seitenwand 14a des zweiten Basis-Formstücks 12 ein sich radial erstreckender Kanal oder Zwischenraum 23 frei bleibt, der zudem in Umfangsrichtung U der Trommel 3 verläuft. In diesen sich radial erstreckenden Zwischenraum 23 wird in einem weiteren Schritt ebenfalls Halbzeug-Material 23a eingefügt oder aufgelegt, so dass sich ein radial verlaufender Halbzeug-Steg ergibt, der bei dem herzustellenden Bauteil einen Kragen zum in axialer Richtung des Bauteils gelegenen Abschluss des Innenbördels des herzustellenden Spants bildet. Das erste Zwischen-Formstück 21 liegt mit seiner ersten, dem ersten Trommelende 3a zugewandten, radial verlaufenden Seitenfläche 21 a an der dieser zugewandten Seitenfläche oder Ausnehmungswand 13b des ersten Basis-Formstücks 11 an (Figur 3b).

Das erste Zwischen-Formstück 21 wird in einem weiteren Schritt durch ein drittes Zwischen-Formstück 30 ersetzt, das ebenfalls nur für einen Zwischenschritt verwendet und danach ersetzt wird (Figur 3c). Das dritte Formstück 30 verläuft in axialer Richtung L der Trommel 3 an dessen Seitenabschnitt 36 entlang dem ersten Formstück 11 und erstreckt sich in axialer Richtung über dieses hinaus auch entlang eines Abschnitts des zweiten Basis-Formstücks 12, wobei es an diesem Abschnitt anliegt. Zur Befestigung oder Stabilisierung des dritten Formstücks 30, weist dieses auf der dem zweiten Basis-Formstück 12 zugewandten Seite einen in Umfangsrichtung U umlaufenden und sich zur Trommelachse hin gerichteten Vorsprung 35 auf. Weiterhin weist das zweite Basis-Formstück 12 eine auf der dem dritten Formstück 30 zugewandten Seite eine Nut 27 auf zur formschlüssigen Aufnahme des umlaufenden Vorsprungs 35 und zur Fixierung des dritten Zwischenstücks in axialer Richtung L der Trommel 3. Das dritte Formstück 30 ist derart gestaltet und in der Ausnehmung 15 gelegen, dass dieses zwischen seiner ersten, radial verlaufenden und dem ersten Trommelende 3a zugewandten Seitenwand und der Seitenfläche 11 b oder Ausnehmungswand des ersten Basis-Formstücks 11 einen sich radial und in Umfangsrichtung U erstreckenden Kanal oder Zwischenraum 33 freigibt, in den in einem weiteren Schritt Halbzeug-Material 34a eingelegt wird, das sich an die Material-Schicht 19 für die Ausbildung des Innenbördels rechtwinklig anschließt (Figur 3c).

In einem weiteren Schritt werden auf den bisher vorgenommenen Formstück-Aufbau ein erstes profiliertes Formstück 41 und ein zweites profiliertes Formstück 42 aufgesetzt (Figur 3d), die derart gestaltet und auf dem bisher vorgenommenen Formstück-Aufbau positioniert werden, dass sich zwischen diesen ein in radialer Richtung R verlaufender Zwischenraum 43 ausbildet, der sich an den radial verlaufenden Zwischenraum 33 mit gleicher Breite anschließt (Figur 3e). Der Zwischenraum 43 bildet sich dabei zwischen einander zugewandten radial verlaufenden und einander gegenüber liegenden Seitenflächen 41 b, 42a des ersten profilierten Formstücks 41 bzw. des zweiten profilierten Formstücks 42 aus. In den Zwischenraum und auf das in den Zwischenraum 33 eingebrachte Halbzeug-Material wird anschließend wiederum Matrix-Material und/oder Halbzeug-Material eingefügt oder aufgelegt, so dass sich bei dem herzustellenden Bauteil ein radial verlaufender Halbzeug-Steg ergibt, der eine Verlängerung des durch den Zwischenraum 33 entstehenden Steges darstellt.

Das erste profilierte Formstück 41 hat an seiner Innen-Umfangsseite eine Auflagefläche 41c, die derart beschaffen ist und insbesondere einen derartigen Innenradius hat, dass das erste profilierte Formstück 41 vom ersten Ende 3a der Trommel 3 her in Längsrichtung L auf den bisherigen Formaufbau aufschiebbar ist. Ebenso hat das zweite profilierte Formstück 42 an seiner Innen-Umfangsseite eine Auflagefläche 42c, die derart beschaffen ist und insbesondere einen derartigen Innenradius hat, dass das zweite profilierte Formstück 42 vom zweiten Ende 3b der Trommel 3 her in Längsrichtung L auf den bisherigen Formaufbau aufschiebbar ist (Figur 3d). Zur Verstärkung der Formstücke 41 und 42 gegen Torsion und gegen in Umfangsrichtung U wirkende Kräfte sind diese an ihrer äußeren dem ersten 3a bzw. dem zweiten 3b Trommelende zugewandten Seiten mit Rippen 41 a bzw. 42b versehen. Weiterhin weisen die Formstücke 41 und 42 an ihrer Innenfläche 41c bzw. 42c von dieser aus sich nach innen, d.h. zur Trommel-Mittelachse erstreckende, ringförmige oder andersartige Vorsprünge 45, 46 auf. Diese Vorsprünge kommen bei dem Aufschieben der Formstücke 41, 42 auf die Anordnung der bereits auf der Trommel 3 positionierten Formstücke in Anlage mit einer zum jeweiligen Trommelende 3a, 3b hin gerichteten Seitenfläche des jeweiligen Formstücks 11 bzw. 30, auf das im gegebenen Anwendungsfall das jeweilige der Formstücke 41 bzw. 42 vom jeweiligen Trommelende 3a bzw. 3b her jeweils aufgeschoben wird.

In dem dargestellten Ausführungsbeispiel weist das dem ersten Trommelende 3a nahe liegende Formstück 41 eine sich in seiner Breite in der axialen Trommelrichtung erstreckende Aufnahme oder Vertiefung oder Kanal 50 auf, deren Inneres mit dem Zwischenraum 43 verbunden ist. In den Kanal 50 wird weiteres Halbzeug-Material eingelegt, das sich an das in den Zwischenraum 43 eingelegte Material anschließt. Das in den Kanal 50 eingelegte Material bildet beim herzustellenden Bauteil einen ringförmig sich in axialer Richtung der Trommel 3 erstreckenden Außengurt.

Zum Abschluss des Formaufbaus im Anwendungsfall nach den Figuren 3a bis 3f wird auf diesen vom ersten Trommelende 3a her ein ringförmiges Deckelelement 60 oder Abschlussstück gegen eine Anschlagsfläche 47, die vom ersten Trommelende 3a her gesehen jenseits des äußersten Kanals 50 gelegen ist, aufgeschoben, so dass bei einer entsprechenden Gestaltung des Ringdeckelelements 60 dasselbe den Kanal 50 abdeckt (Figur 3f). Unter dem Deckelelement 60 endet der Kanal 50 und das Deckelelement 60 schließt des Kanal 50 ab, so dass bei einem Rotieren der Trommel 3 das Deckelelement 60 ein Herausbewegen des Matrix-Materials aus dem Kanal verhindert.

Bei dem Formstückaufbau können somit Formstücke verwendet werden, die einstückig sind und insbesondere einstückig hergestellt sind. Dies gilt im gegebenen Anwendungsfall für die Formstücke 11, 12, 41, 42. Weiterhin können Formstücke verwendet werden, die aus mehreren, d.h. mindestens zwei Umfangsteilen gebildet werden, die aneinander angelegt einen in Umfangsrichtung U geschlossenen Ring bilden. Dies gilt im gegebenen Anwendungsfall für die Formstücke 21, 22, 30. Dies sind zum Teil Formstücke, die aus kinematischen Gründen auf ihre bestimmungsgemäße Position nicht durch Aufschieben gebracht werden können. Bei diesen in Umfangsrichtung zusammen gesetzten Formstücken werden diese in Umfangrichtung miteinander befestigt, wozu z.B. an ihren in Umfangsrichtung gelegenen Enden befestigte Koppelelemente oder umlaufende Bänder verwendet werden können.

Nach der Erfindung werden vorzugsweise Bauteile in einer Gestalt hergestellt, bei deren Anordnung zueinander sich ein Verlauf des zu bildenden Kanals ergibt, der zumindest in radialer Richtung verlaufende Abschnitte aufweist. Dabei wird eine Kombination von einstückigen oder einstückig hergestellten Formstücken verwendet, die sich aus kinematischen Gründen notwendigerweise in Umfangsrichtung erstrecken.

Die Merkmale der Formstücke des beschriebenen Anwendungsfalls können für andere Anwendungsfälle, d.h. anders gestaltete herzustellende Bauteile, je nach der Konstruktion des Formaufbaus und den daraus resultierenden kinematischen Gegebenheiten in anderer Weise kombiniert werden.

Dabei können insbesondere auch Formstücke wie die Formstücke 21 oder 22 vorgesehen sein, die nur für einen Zwischenschritt der Halbzeug-Auflegens benötigt werden und die danach durch andere Formstücke ersetzt werden, um den mit Halbzeug-Material zu belegenden Kanal fortzuführen.

Das Halbzeug-Material kann z.B. als Gelege oder Fasermatten in Schichten aufgelegt oder als Garn oder Roving im jeweils vorbereiteten Kanal aufgewickelt und derart in den Kanal eingebracht werden. Dabei kann insbesondere vorgesehen sein, dass die Fasern oder Fäden oder Garne oder Rovinge der Halbzeuge in einer vorbestimmten Orientierung in den jeweiligen Kanalabschnitt eingelegt werden.

Der jeweils vorbereitete Kanal wird vorzugsweise derart mit in dem jeweiligen Formaufbau verwendeten Formstücken gestaltet, dass dieser dann mit dem Halbzeug-Material auf einheitliche Weise, also z.B. mit derselben Wickeltechnik oder Auflegetechnik angefüllt werden kann. Jedoch kann auch eine Kombination verschiedener Auflegeverfahren bei dem Auffüllen des jeweils vorbereiteten Kanals angewendet werden.

Der zu bildende sich in Umfangsrichtung und radialer Richtung erstreckende Kanal verläuft im Axialschnitt der Trommel gesehen abschnittsweise in radialer oder auch in axialer Richtung gegebenenfalls mit entsprechenden Übergängen zwischen einem axialen und einem radialen Bereich. In besonderen Fällen kann auch ein Kanal gebildet werden, dessen Querschnitt im Axialschnitt der Trommel gesehen, schräg zur axialen Richtung L oder radialen Richtung R verläuft.

Mit oder nach der Positionierung einer Mehrzahl von ring- oder teilringförmigen Formstücken auf der rotierbaren Trommel 3 derart, dass diese eine spulenartige Form mit einem ringförmigen, aus Kanalabschnitten 19, 33, 45, 50 gebildeten Kanal zur Aufnahme des Halbzeugs bilden, sowie einem mehrlagigen Auftragen des Halbzeugs in den Kanal der spulenartigen Form, erfolgt optional ein Einbringen von Matrix-Material in den mit dem Halbzeug-Material gefüllten Kanal. Dieser Schritt kann auch entfallen, wenn das Halbzeug bereits ausreichend Matrix-Material aufweist.

Dies kann schrittweise nach Vorbereitung eines Kanalabschnitts 19, 33, 45, 50 erfolgen oder nach Vorbereitung einer Mehrzahl von Kanalabschnitten 19, 33, 45, 50 oder nach Vorbereitung des gesamten aus den Kanalabschnitten 19, 33, 45, 50 gebildeten Kanals und insbesondere nach Aufsetzen eines Ringdeckelelementes 60 erfolgen.

Dabei kann das Halbzeug bereits mit Matrix-Material versehen sein, z.B. bei der Verwendung von Prepregs für das Matrix-Material.

Alternativ oder zusätzlich kann ein Matrix-Material-Zufuhrkanal beim Formstück-Aufbau oder danach gebildet werden, der mit einer Matrix-Material-Zufuhreinrichtung mit einem Vorratsbehälter für das Matrix-Material in Verbindung steht, so dass von der Matrix-Material-Zufuhreinrichtung Matrix-Material in den aus Formstücken gebildeten Kanal 19, 33, 45, 50 eingeführt werden kann. Die Matrix-Material-Zufuhreinrichtung kann innerhalb der Trommel 3a oder außerhalb der Trommel 3 gelegen sein, so dass sich der Zufuhrkanal von dem aus Formstücken gebildeten Kanal 19, 33, 45, 50 in den Bereich innerhalb der Trommel oder in die äußere Umgebung der Trommel erstrecken kann.

Nach Einbringen von Halbzeug-Material und von Matrix-Material in den aus Formstücken gebildeten Kanal 19, 33, 45, 50 erfolgt ein Rotieren der Trommel derart, dass aufgrund der Zentrifugalkräfte das Matrix-Material nach außen gedrückt und im Kanal enthaltene Luft radial nach innen verdrängt wird, so dass die Kanalfüllung für die Bildung eines Kunststoffs hoher Qualität vorbereitet wird.

Für das Verdrängen oder Entweichen der Luft aus dem Kanal 19, 33, 45, 50 kann ein zusätzlicher Auslasskanal gebildet sein, der durch einen zwischen Formstücken gebildeten Zwischenraum entstanden ist oder der mit anderen Mitteln, z.B. das Einsetzen einer Kanüle in ein am weitesten innen liegenden Formstück erfolgen kann. Der Auslasskanal erstreckt sich von einem radial am weitesten innen liegenden Ort des aus Formstücken gebildeten Kanals 19, 33, 45, 50. Der Auslasskanal erstreckt sich in das Innere der Trommel 3 und kann an seinem inneren Ende offen sein oder in einen Aufnahmebehälter münden. Der Auslasskanal kann auch identisch mit dem Zufuhrkanal sein, wenn letzterer an einem radial am weitesten innen liegenden Ort des aus Formstücken gebildeten Kanals 19, 33, 45, 50 in diesen einmündet.

In einem weiteren Schritt erfolgt das Aushärten des Halbzeug-Materials und Matrix-Materials, das in den aus Formstücken gebildeten Kanal 19, 33, 45, 50 gelegen ist, unter Anwendung von Temperatur zu einem Kunststoff-Ring oder Teil-Ring und die Entnahme des Kunststoff-Rings aus der spulenartigen Form oder des aus Formstücken gebildeten Formstück-Aufbaus.

Die erfindungsgemäß verwendeten Formstücke müssen nicht rotations-symmetrisch oder teil-rotations-symmetrisch sein, d.h. müssen nicht in Umfangsrichtung parallel verlaufenden Kanten aufweisen und können z.B. in Umfangsrichtung U gesehen rampenförmig gestaltet sein, was erfindungsgemäß auch unter die Bezeichnung "ring- oder teilringförmig" fällt. Die Formstücke können je nach der Gestaltung des herzustellenden Bauteils auch nicht-symmetrisch gebildet sein. Wesentlich ist, dass diese schrittweise aneinander gesetzt werden, so dass sich zwischen diesen ein Kanal zum Einlegen von Halbzeug und/oder zur Einführung von Matrix-Material ausbildet. Der Kanal hat einen Anteil in Umfangsrichtung und radialer Richtung, so dass beim Rotieren der Trommel eine Zentrifugalwirkung auf das Matrix-Material ausgeübt wird.

Die Merkmale der Formstücke, z.B. der Basis-Formstücke und Zwischen-Formstücke und anderer Formstücke können an diesen generell vorgesehen oder nicht vorgesehen sein, um eine Anordnung derselben erreichen zu können, bei denen die Herstellung eines Bauteils vorbestimmter Gestaltung erfindungsgemäß erfolgen kann.

## Patentansprüche

1. Verfahren zur Herstellung eines ringförmigen oder teilringförmigen, faserverstärkten Kunststoff enthaltenden Halbzeugs oder Bauteils aus FVW-Halbzeugen, mit den Schritten:
(a) Positionierung zumindest eines ring- oder teilringförmigen Formstücks auf einer rotierbaren Trommel (3) derart, dass diese eine spulenartige Form mit einem ring- oder teilringförmigen Kanalabschnitt (19, 33, 45, 50) ergibt, die sich in radialer Richtung und/oder in Längsrichtung der Trommel erstreckt,
(b) mehrlagiges Auftragen von Halbzeug-Material in den Kanalabschnitt (19, 33, 45, 50) der spulenartigen Form,
(c) zumindest einmalige Wiederholung der Schritte (a) und (b) mit dem Hinzufügen zumindest eines ring- oder teilringförmigen Formstücks auf der rotierbaren Trommel unter Ausbildung eines weiteren Kanalabschnitts, der sich an den bisherigen Kanalabschnitt anschließt, und Einlegen von Halbzeug-Material in den Kanalabschnitt, wobei die entstandene Abfolge von Kanalabschnitten zumindest teilweise die Form für das herzustellende Bauteil bildet,
(d) Einbringen von Matrix-Material in die Kanalabschnitte (19, 33, 45, 50) mit dem Einlegen von Halbzeug-Material in einzelne Kanalabschnitte oder/und nach Ausbildung zumindest eines Kanalabschnitts,
(e) nach Ausbildung der Kanalabschnitte (19, 33, 45, 50) mit darin vorhandenen enthaltenen Halbzeug-Material und Matrix-Material Rotieren der Trommel (3) derart, dass das Matrix-Material aufgrund der Zentrifugalkräfte nach außen gedrückt und im Kanal enthaltene Luft radial nach innen verdrängt wird,
(f) Aushärtung des in dem Kanal (19, 33, 45, 50) befindlichen Matrix-Materials, unter Anwendung von Temperatur,
(g) nach der Härtung des ringförmigen Halbzeugs oder Bauteils Auftrennen der Anordnung von Formstücken in Abschnitte und Entnahme des gehärteten ringförmigen Halbzeugs oder Bauteils,
**dadurch gekennzeichnet, dass**
zwei aneinander liegende Formstücke (12, 30) derart gestaltet sind, dass diese formschlüssig zusammenwirken, so dass das in radialer Richtung der Trommel (3) außen liegende Formstück (30) an dem radial innen liegenden Formstück (12) in axialer Richtung der Trommel (3) fixiert ist, und dass eine in die axiale Richtung gerichtete Seitenwand des außen liegenden Formstücks (30) eine Seitenwand eines Kanalabschnitts (34a) bildet.

2. Verfahren nach dem Anspruch 1, **dadurch gekennzeichnet, dass** ein Kanalabschnitt eine radial nach außen offene Ausnehmung ist.

3. Verfahren nach einem der voranstehenden Ansprüche, **dadurch gekennzeichnet, dass** zwei Formstücke auf die jeweils gebildete Anordnung von Formstücken (11, 30) derart aufgebracht werden, dass zwei einander gegenüber liegende Seitenwände und entlang der radialen Richtung der Trommel (3) verlaufenden Seitenwände der Formstücke (41, 42) einen Kanalabschnitt (43) zur Bildung eines Bauteil-Steges ausbilden, der sich an einen mittels Formstücken (11, 30) bereits gebildeten Kanalabschnitt (33) anschließt, und dass auf entsprechende Aufnahmeflächen der Formstücke (41, 42) ein sich in Umfangsrichtung erstreckendes Deckelelement (60) aufgebracht wird, das den gebildeten Kanalabschnitt in radialer Richtung nach außen abschließt, so dass bei dem Rotieren der Trommel (3) das Abschlussstück (60) ein Herausbewegen des Matrix-Materials aus dem Kanal verhindert.

4. Verfahren nach einem der voranstehenden Ansprüche, **dadurch gekennzeichnet, dass** eine Oberfläche des Deckelelements (60) und die Oberseite zumindest eines der Formstücke (11, 30) einen sich in axialer Richtung der Trommel (3) erstreckenden Kanalabschnitt (50) bilden, der an einen entlang der radialen Richtung der Trommel (3) verlaufenden Kanalabschnitt zur Bildung eines Bauteil-Steges anschließt, und dass zur Bildung eines sich axial erstreckenden Flansches in den sich axial erstreckenden Kanalabschnitt (50) Halbzeug-Material eingelegt und Matrix-Material eingeführt wird.

5. Verfahren nach einem der voranstehenden Ansprüche, **dadurch gekennzeichnet, dass** bei der Bildung der spulenartigen Form mit dem ringförmigen Kanal (19, 33, 45, 50) aus einer Mehrzahl von ring- oder teilringförmigen Formstücken zumindest ein Zufuhrkanal für die Einführung von Matrix-Material in den Kanal (19, 33, 45, 50) gebildet wird, durch den das Matrix-Material in die Kanalabschnitte (19, 33, 45, 50) eingeführt wird.

6. Verfahren nach dem Anspruch 5, **dadurch gekennzeichnet, dass** der Zufuhrkanal von dem Inneren der Trommel in den Kanal mündet.

7. Verfahren nach dem Anspruch 1 oder 3, **dadurch gekennzeichnet, dass** ein Zufuhrkanal gebildet wird, der von dem Kanal in die äußere Umgebung der Trommel mündet.

8. Verfahren nach einem der voranstehenden Ansprüche, **dadurch gekennzeichnet, dass** das Einfügen von Halbzeug-Material in einen Kanalabschnitt durch ein Wickelverfahren oder ein Auflegeverfahren erfolgt.

9. Verfahren nach einem der voranstehenden Ansprüche, **dadurch gekennzeichnet, dass** das Matrix-Material mittels Einlegen von Prepreg-Halbzeugmaterial in die Kanalabschnitte (19, 33, 45, 50) eingelegt wird.

10. Verfahren nach einem der voranstehenden Ansprüche, **dadurch gekennzeichnet, dass** als Matrix-Material ein Harz verwendet wird.

11. Verfahren nach einem der voranstehenden Ansprüche, **dadurch gekennzeichnet, dass** als Halbzeug Fasermaterial mit einer vorbestimmten Faser- Orientierung verwendet wird, dass die Halbzeuge in vorbestimmter Weise in die Kanalabschnitte eingelegt werden, um in dem herzustellenden faserverstärkten Kunststoff enthaltenden ringförmigen Halbzeug oder Bauteil eine vorbestimmte Faserorientierung vorzusehen, und dass als HalbzeugRovinge, Fabrics, textile Gelege, Prepregs und/oder Fäden verwendet werden.

12. Verfahren nach einem der voranstehenden Ansprüche, **dadurch gekennzeichnet, dass** die Formstücke aus faserverstärkten Materialien gebildet sind.

13. Verfahren nach einem der voranstehenden Ansprüche, **dadurch gekennzeichnet, dass** der Kanal (19, 33, 45, 50) der spulenartigen Form derartig gebildet ist, dass dieser die Form für eine Kombination aus zumindest einem Bördel und zumindest einem Steg für das herzustellende Bauteil bildet.

14. Verfahren nach einem der voranstehenden Ansprüche, **dadurch gekennzeichnet, dass** die Positionierung einer Mehrzahl von ring- oder teilringförmigen Formstücken auf einer rotierbaren Trommel (3) derart erfolgt, dass auf derselben Trommel (3) in Längsrichtung (L) der Trommel (3) nebeneinander mehrere Bauteile aus FVW-Halbzeugen hergestellt und von der Trommel (3) entnommen werden.

## Claims

1. A method for manufacturing a fibre-reinforced-plastic-containing ring-shaped or partly ring-shaped semifinished product or component from fibre-composite semifinished products, comprising the steps of:
(a) positioning at least one ring-shaped or partly ring-shaped mould piece on a rotatable drum (3) in such a manner that the latter comprises a reel-shaped mould with a ring-shaped or partly ring-shaped channel section (19, 33, 45, 50) that extends in an outward radial direction, and/or in a longitudinal direction, of the drum,
(b) multilayer application of semifinished product material in the channel section (19, 33, 45, 50) of the reel-shaped mould,
(c) at least one repetition of steps (a) and (b) with the addition of at least one ring-shaped or partly ring-shaped mould piece on the rotatable drum while forming a further channel section that continues on from the existing channel section, and placement of semi-finished-product material in the channel section, wherein the created sequence of channel sections at least in part provides the mould for the component to be manufactured,
(d) placing matrix material in the channel sections (19, 33, 45, 50) with the insertion of semifinished-product material in individual channel sections or/and after forming at least one channel section,
(e) after forming the channel sections (19, 33, 45, 50) with semifinished product material and matrix material contained therein, rotating the drum (3) in such a manner that as a result of the centrifugal forces the matrix material is pressed towards the outside and air contained in the channel is displaced radially inwards,
(f) curing the matrix material contained in the channel (19, 33, 45, 50) under the application of temperature,
(g) after curing the ring-shaped semifinished product or component, separating the mould pieces into sections, and removing the cured ring-shaped semifinished product or component,
**characterized in that**
at least two mould pieces (12, 30) are designed in such a manner that they interact in a positive-locking manner so that the mould piece (30) that is situated on the outside in radial direction of the drum (3) is affixed in axial direction of the drum (3) to the mould piece (12) that is situated radially on the inside, and so that a sidewall, directed in the axial direction of the mould piece (30) that is situated in the outside forms a sidewall of a channel section (34a).

2. The method according to claim 1, wherein the channel section is a recess that is radially open towards the outside.

3. The method according to any one of the preceding claims, wherein two mould pieces are placed on the respectively formed arrangement of mould pieces (11, 30) in such a manner that two opposing sidewalls of the mould pieces (41, 42), which sidewalls extend along the radial direction of the drum (3), form a channel section (43) so as to form a component web that follows on from a channel section (43) that has already been formed by means of mould pieces (41, 42), and that on corresponding receiving surfaces of the mould pieces (41, 42) a cover element (60) that extends in circumferential direction is applied, which cover element (60) closes off the formed channel section (33) in radial direction towards the outside so that during rotation of the drum (3) the end piece (60) prevents the matrix material from moving out of the channel.

4. The method according to any of the preceding claims, wherein a surface of the cover element (60) and the top of at least one of the mould pieces (11, 30) form a channel section (50) that extends in axial direction of the drum (3), which channel section follows on from a channel section that extends along the radial direction of the drum so as to form a component web, and in order to form an axially extending flange, semifinished-product material is inserted and matrix material is introduced into the axially extending channel section (50).

5. The method according to any of the preceding claims, wherein, in the formation of the reel-shaped mould with the ring-shaped channel (19, 33, 45, 50) comprising a multitude of ring-shaped or partly ring-shaped mould pieces, at least one feed channel is formed for introducing matrix material into the channel (19, 33, 45, 50), through which feed channel matrix material is introduced into the channel sections (19, 33, 45, 50).

6. The method according to claim 5, wherein a feed channel leads from the interior of the drum into the channel.

7. The method according to claim 1 or 3, wherein a feed channel is formed that leads from the channel to the external surroundings of the drum.

8. The method according to any of the preceding claims, wherein the insertion of semifinished product material in a channel section takes place by means of a winding method or a laying method.

9. The method according to any of the preceding claims, wherein the matrix material is inserted into the channel sections (19, 33, 45, 50) by means of inserting prepreg semifinished-product material.

10. The method according to any of the preceding claims, wherein a resin is used as the matrix material.

11. The method according to any of the preceding claims, wherein the semifinished products are inserted into the channel sections in a predetermined manner in order to provide the ring-shaped semifinished product or component that is to be manufactured, which semifinished product or component comprises fibre-reinforced plastic, with a predetermined fibre orientation; and rovings, fabrics, inter-laid textile scrim, prepreg and/or yarns are used as a semifinished product.

12. The method according to any of the preceding claims, wherein the mould pieces comprise fibre-reinforced materials.

13. The method according to any of the preceding claims, wherein the channel (19, 33, 45, 50) of the reel-shaped mould is formed in such a manner that said channel forms the mould for a combination comprising at least one bead and at least one web for the component to be manufactured.

14. The method according to an of the preceding claims, wherein positioning a multitude of ring-shaped or partly ring-shaped mould pieces on a rotatable drum (3) takes place in such a manner that on the same drum (3) in longitudinal direction (L) of the drum (3) side by side several components comprising fibre-composite semifinished products are manufactured and removed from the drum (3).

## Revendications

1. Procédé pour la fabrication d'un produit semi-fini en forme d'anneau ou en forme d'anneau partiel qui contient une matière plastique renforcée par des fibres ou d'un composant en produits semi-finis en matière plastique renforcée par des fibres avec les étapes :
(a) positionnement d'au moins une pièce moulée en forme d'anneau ou d'anneau partiel sur un tambour rotatif (3) de telle manière que celui-ci donne un moule de type bobine avec une section de canal en forme d'anneau ou d'anneau partiel (19, 33, 45, 50) qui s'étend dans le sens radial et/ou dans le sens longitudinal du tambour,
(b) application en plusieurs couches de matériau de produit semi-fini dans la section de canal (19, 33, 45, 50) du moule de type bobine,
(c) répétition au moins une fois des étapes (a) et (b) avec l'addition d'au moins une pièce moulée en forme d'anneau ou d'anneau partiel sur le tambour rotatif en formant une autre section de canal qui se rattache à la section de canal précédente et mise en place de matériau de produit semi-fini dans la section de canal, cependant que la séquence de sections de canal créée forme au moins partiellement le moule pour le composant à fabriquer,
(d) mise en place de matériau de matrice dans les sections de canal (19, 33, 45, 50) avec l'insertion de matériau de produit semi-fini dans des sections de canal individuelles et/ou après formation d'au moins une section de canal,
(e) après formation des sections de canal (19, 33, 45, 50) avec le matériau de produit semi-fini existant qui y est contenu et du matériau de matrice rotation du tambour (3) de telle manière que le matériau de matrice est poussé vers l'extérieur en raison des forces centrifuges et que de l'air contenu dans le canal est repoussé radialement vers l'intérieur,
(f) durcissement du matériau de matrice qui se trouve dans le canal (19, 33, 45, 50) en appliquant de la température,
(g) après durcissement du produit semi-fini ou du composant en forme d'anneau, division de l'arrangement de pièces moulées en sections et prélèvement du produit semi-fini ou du composant durci en forme d'anneau,
**caractérisé en ce que**
deux pièces moulées adjacentes (12, 30) sont configurées de telle manière qu'elles coopèrent par combinaison de formes de telle manière que la pièce moulée située à l'extérieur (30) en direction radiale du tambour (3) est fixée contre la pièce moulée située radialement à l'intérieur (12) dans le sens axial du tambour (3) et qu'une paroi latérale de la pièce moulée située à l'extérieur, paroi orientée dans le sens axial, forme une paroi latérale d'une section de canal (34a).

2. Procédé selon la revendication 1, **caractérisé en ce qu'**une section de canal est un évidement ouvert radialement vers l'extérieur.

3. Procédé selon l'une des revendications précédentes, **caractérisé en ce que** deux pièces moulées sont appliquées sur l'arrangement de pièces moulées (11, 30) respectivement formé de telle manière que deux parois latérales opposées l'une à l'autre et des parois latérales des pièces moulées (41, 42) qui s'étendent le long du sens radial du tambour (3) forment une section de canal (43) pour former une barrette de composant qui se rattache à une section de canal (33) déjà formée au moyen de pièces moulées (11, 30) et qu'un élément de couvercle (60) qui s'étend dans le sens de la circonférence est appliqué sur des surfaces de logement correspondantes des pièces moulées (41, 42), élément de couvercle qui termine la section de canal formée dans le sens radial vers l'extérieur si bien que, lors de la rotation du tambour (3), la pièce terminale (60) empêche que le matériau de matrice ne se déplace et sorte du canal.

4. Procédé selon l'une des revendications précédentes, **caractérisé en ce qu'**une surface de l'élément de couvercle (60) et la face supérieure d'au moins l'une des pièces moulées (11, 30) forment une section de canal (50) qui s'étend dans le sens axial du tambour (3) qui se rattache à une section de canal qui s'étend le long du sens radial du tambour (3) pour former une barrette de composant et que, pour former une bride qui s'étend dans le sens axial, du matériau de produit semi-fini est mis en place dans la section de canal qui s'étend dans le sens axial (50) et que du matériau de matrice y est introduit.

5. Procédé selon l'une des revendications précédentes, **caractérisé en ce que**, lors de la formation du moule de type bobine avec le canal en forme d'anneau (19, 33, 45, 50) au moins un canal d'amenée est formé à partir d'une multitude de pièces moulées en forme d'anneau ou d'anneau partiel pour l'introduction de matériau de matrice dans le canal (19, 33, 45, 50), canal par lequel le matériau de matrice est introduit dans les sections de canal (19, 33, 45, 50).

6. Procédé selon la revendication 5, **caractérisé en ce que** le canal d'amenée débouche de l'intérieur du tambour dans le canal.

7. Procédé selon la revendication 1 ou 3, **caractérisé en ce qu'**un canal d'amenée est formé qui débouche du canal dans l'environnement extérieur du tambour.

8. Procédé selon l'une des revendications précédentes, **caractérisé en ce que** la mise en place de matériau de produit semi-fini dans une section de canal se fait par un procédé d'enroulement ou un procédé de pose.

9. Procédé selon l'une des revendications précédentes, **caractérisé en ce que** le matériau de matrice est mis en place par mise en place de matériau de produit semi-fini prépreg dans les sections de canal (19, 33, 45, 50).

10. Procédé selon l'une des revendications précédentes, **caractérisé en ce qu'**une résine est utilisée comme matériau de matrice.

11. Procédé selon l'une des revendications précédentes, **caractérisé en ce que** l'on utilise, comme produit semi-fini, du matériau à fibres avec une orientation de fibres prédéterminée, que les produits semi-finis sont mis en place d'une manière prédéterminée dans les sections de canal pour prévoir une orientation de fibres prédéterminée dans le produit semi-fini ou le composant en forme d'anneau à fabriquer qui contient de la matière plastique renforcée par des fibres et que des tissus, des nappes textiles, des prépregs et/ou des fils sont utilisés comme stratifils de produit semi-fini.

12. Procédé selon l'une des revendications précédentes, **caractérisé en ce que** les pièces moulées sont formées en matériaux renforcés par des fibres.

13. Procédé selon l'une des revendications précédentes, **caractérisé en ce que** le canal (19, 33, 45, 50) du moule de type bobine est formé de telle manière que celui-ci forme le moule pour une combinaison d'au moins d'un rebord et d'au moins une barrette pour le composant à fabriquer.

14. Procédé selon l'une des revendications précédentes, **caractérisé en ce que** le positionnement d'une multitude de pièces moulées en forme d'anneau ou d'anneau partiel sur un tambour rotatif (3) se fait de telle manière que plusieurs composants sont fabriqués l'un à côté de l'autre sur le même tambour (3) à partir de produits semi-finis en matière plastique renforcée par des fibres dans le sens longitudinal (L) du tambour (3) et qu'ils sont prélevés par le tambour (3).
